# EUROPÄISCHE PATENTANMELDUNG

(11) **EP 4 718 173 A1**
(43) Veröffentlichungstag der Anmeldung: **01.04.2026**
(21) Anmeldenummer: 24203711.7
(22) Anmeldetag: 30.09.2024
(51) Int. Cl.: G05B 17/02, G05B 19/418, G06F 9/455, G06F 13/10

(54) **ANORDNUNG UND VERFAHREN ZUM BETRIEB EINER INDUSTRIELLEN ANWENDUNG MIT EINER VIRTUELLEN INDUSTRIELLEN BAUGRUPPE**

(71) Anmelder: Siemens Aktiengesellschaft, 80333 München (DE)
(72) Erfinder: Albert, Marcel, 91074 Herzogenaurach (DE); Graf, Rene, 90513 Zirndorf (DE); Loreth, Jürgen, 93449 Waldmünchen (DE)
(74) Vertreter: Siemens Patent Attorneys

(57) **Zusammenfassung**

Die Erfindung betrifft eine Anordnung und ein Verfahren zum Betrieb einer industriellen Anwendung (AW) mit einer virtuellen industriellen Baugruppe (BGR), wobei die Anwendung (AW) zum Ablauf auf einer Hardware-Einheit (PLC) installiert ist, und zum Zusammenwirken mit einem Anwendungsinterface (RWB-IF) eines Treibers für eine deterministische Hardwareschnittstelle für den Zugriff auf eine virtuelle Baugruppe (BGR) eingerichtet ist. Für die Anwendung (AW) ist ein Treiber (RQB) mit dem Anwendungsinterface (RWB-IF) auf der Hardware-Einheit (PLC) eingerichtet, wobei der Treiber (RQB) zum Umsetzen der Zugriffe der Anwendung (AW) auf die Baugruppe (BGR) in ein echtzeitfähiges Kommunikationsverfahren eingerichtet ist, und wobei die Baugruppe (BGR) zum Zusammenwirken mit dem Anwendungsinterface (RWB-IF) für die deterministische Hardwareschnittstelle ausgestaltet und die Baugruppe (BGR) zum Ablauf auf der oder einer anderen Hardware-Einheit (PER) installiert ist, wobei auf dieser Hardware-Einheit (PER) zur Baugruppe (BGR) der oder ein anderer Treiber mit dem Anwendungsinterface (RWB-IF) installiert ist, wobei dieser Treiber (RQB) zum Umsetzen der Zugriffen der Anwendung (AW) über deren Treiber (RQB) und das echtzeitfähige Kommunikationsverfahren auf die Baugruppe (BGR) eingerichtet ist, und wobei die Treiber (RQB) über ein Kommunikationsmittel gemäß dem echtzeitfähigen Kommunikationsverfahren miteinander verbunden sind.

## Beschreibung

Die Erfindung betrifft eine Anordnung zum Betrieb einer industriellen Anwendung mit einer virtuellen industriellen Baugruppe gemäß dem Oberbegriff des Patentanspruchs 1, und ein Verfahren zum Betrieb einer industriellen Anwendung mit einer virtuellen industriellen Baugruppe gemäß dem Oberbegriff des Patentanspruchs 6.

Im Automatisierungsumfeld wird immer häufiger die Methode der virtuellen Inbetriebnahme verwendet, insbesondere im Bereich virtueller oder simulierter speicherprogrammierbarer Steuerungen (PLCs) und deren Anwendungen (z.B. Automatisierungsprogramme). Dabei kann aber nur der Ablauf des PLC-Programms selbst simuliert werden, aber nicht die an die PLC angeschlossene zentrale Peripherie, z.B. Kommunikations-Prozessoren, über die die PLC weitere Kommunikations-Verbindungen aufbauen kann, die auch additive Merkmale wie beispielsweise eine Firewall haben, was die PLC selbst nicht bereitstellen kann.

Als zentrale Peripherie wird hierbei eine direkt an eine Steuerung angeschlossene Erweiterung bezeichnet, im Gegensatz zu Peripherie, die beispielswiese über ein Feldbussystem oder andere Datenschnittstellen wie Ethernet angeschlossen sind (dezentrale Peripherie). Zentrale Peripherie umfasst hier insbesondere Baugruppen, die zusammen mit einer Steuerung (PLC) an einem Rückwandbus eines Baugruppenhalters, Rack genannt, eingesteckt sind und über diesen mit allen anderen Busteilnehmern kommunizieren. Ebenso umfasst sind Baugruppen, die in eine Erweiterung ("abgesetzter Shelf") des Rückwandbusses eingesetzt sind, wobei der erstgenannte Rückwandbus und der Rückwandbus der Erweiterung über eine deterministische performante Datenverbindung derart miteinander verbunden sind, dass sich ein einheitliches echtzeitfähiges Bussystem ergibt und Baugruppen beider Teile genauso miteinander kommunizieren, als wäre sie nebeneinander gesteckt. Solche Rückwandbus-Systeme sind hochperformant, deterministisch (also insbesondere hinsichtlich ihrer zeitlichen Übertragungsparameter berechenbar, konstant und somit echtzeitfähig) und weisen weitere Vorteile wie beispielsweise Plug-and-Play-Fähigkeit und durch einen eigenen Arbiter (Bus-Verwaltungseinheit) mitunter auch eine selbständige Adressverwaltung auf.

Im Bereich virtueller oder simulierter speicherprogrammierbarer Steuerungen (PLCs) und deren Anwendungen sind ebenso sogenannte Technologie-Module nicht verfügbar, also Erweiterungsbaugruppen einer zentralen Peripherie bzw. eines Rückwandbussystems, die höherwertige Funktionen von schnellen Zählern bis zu neuronalen Netzen der PLC bereitstellen. Des Weiteren können keine IO-Baugruppen angeschlossen werden, so dass die später von zentraler oder dezentraler Peripherie bereitgestellten oder entgegengenommenen Daten ebenfalls mittels weiterer Tools und Programme simuliert werden müssen.

Die genannten Verbindungspartner sind im realen Betrieb einer PLC gemeinhin an eine deterministische, also in ihrem zeitlichen Verhalten definierten, insbesondere "echtzeitfähigen", Hardwareschnittstelle angeschlossen, insbesondere einem vorzugsweise lokal angeschlossenen sog. Rückwandbus(-system). In einer simulierten oder virtualisierten Umgebung steht ein solcher aber nicht bereit, und zwar weder für eine Steuerung (PLC), noch für die ggf. ebenfalls simulierte oder virtualisierte Peripherie. Das ist aber wünschenswert, um virtuelle oder simulierte Steuerungen / PLCs und / oder die virtualisierte oder simulierte Peripherie testen oder virtuell in Betrieb nehmen zu können, auch wenn die realen Geräte noch nicht existieren oder (vorerst) nur in ihrer virtualisierten Form im Zusammenspiel mit anderen virtuellen oder realen Komponenten betrieben werden sollen.

Daher muss die PLC-Konfiguration und eventuell auch das Programm, also die Anwendung, angepasst werden, weil die angeschlossene Hardware bei der virtuellen Inbetriebnahme nicht verfügbar ist, so dass keine 100%ige Abdeckung der Funktionalität für Tests oder dergleichen erreicht werden kann. Wird die PLC später an der realen Anlage in Betrieb genommen, sind einige Teile, die wesentlich für das Echtzeitverhalten sind, nach wie vor ungetestet und verzögern die Abnahme.

Der Trend zu mehr Informationstechnologie (IT) in der Automatisierung (OT) hat eine neue Form an PLCs hervorgebracht, nämlich die bereits erwähnten virtuellen Steuerungen. Diese laufen ähnlich wie die simulierte PLC bei der virtuellen Inbetriebnahme als eine reine Software-Lösung ohne dedizierte Hardware, sind aber im Gegensatz zur Simulation voll deterministisch, also echtzeitfähig. Ebenso hat die virtuelle PLC in der Regel ein Feldbus-Interface, so dass reale dezentrale Peripherie mit ihr verbunden werden kann.

Dennoch besteht auch hier das Problem, dass keine Möglichkeit zur Erweiterung mit zentralen Peripherie-Baugruppen (vorwiegend Kommunikations-Prozessoren und sog. TechnologieModule, z.B. neuronale Co-Prozessoren) gegeben ist. Somit können nicht alle Kundenprojekte mit der virtuellen Steuerung realisiert werden.

Als konkretes Beispiel kann eine Anfrage aus einem konkreten Kundenprojekt angenommen werden, bei dem die PLC mit additiven Kommunikationsbaugruppen virtuell in Betrieb genommen werden soll. Für den Anschluss einer zentralen Peripherie (real oder simuliert) an eine simulierte oder virtuelle Steuerung ist derzeit keine zufriedenstellende Lösung bekannt.

Bei einer klassischen Simulation wird der IO-Bereich der PLC als zugreifbarer Speicherbereich zur Verfügung gestellt, so dass externe Tools diesen mit (sinnvollen) Werten beschreiben können. Eine strenge zeitliche Korrelation zum PLC-Programm ist nicht gegeben.

Bei der virtuellen Steuerung entfällt selbst diese Möglichkeit, so dass nur mit dezentraler Peripherie gearbeitet werden kann, die meist weniger performant an die PLC angebunden ist.

Die Verwendung von zusätzlichen Kommunikations-Prozessoren, um den Netzwerkverkehr auf verschiedene Leitungen mit verschiedenen Inhalten aufzuteilen, ist bei beiden Varianten nicht möglich.

Die heutige Lösung sieht somit zwingend die Anpassung sowohl der PLC-Konfiguration als auch des PLC-Programms vor, weil sowohl die angeschlossene Hardware als auch zusätzliche Kommunikationsverbindungen bei der virtuellen Inbetriebnahme nicht verfügbar sind. Teilweise werden bei der Simulation der PLC die zentralen Baugruppen "vorgegaukelt", also hinsichtlich ihrer Schnittstellen emuliert, so dass die Peripherie zwar als sog. "Dummy" vorhanden ist, aber im Betrieb keinerlei sinnvolle Daten liefern kann.

Damit entsteht zusätzlicher Aufwand, und die Ergebnisse der virtuellen Inbetriebnahme spiegeln nur teilweise die reale Anlage wider. Bei Verwendung der virtuellen PLC können somit nicht alle Projekte realisiert werden, die momentan mit einer realen Steuerung möglich sind, da die virtuelle PLC nicht mit bestimmten zentralen Baugruppen erweiterbar ist, die an einer dezentralen Peripherie nicht sinnvoll betreiben werden können, vorwiegend additive Kommunikationsbaugruppen.

Eine PLC, egal von welchem Hersteller, besteht prinzipiell aus den folgenden vier logischen Einheiten:
1. Steuerungskern: In diesem läuft das von Anwender geschriebene Programm entsprechend dessen Vorgaben zum Zeitverhalten, z.B. wird eine bestimmte Funktion zyklisch alle 10 Millisekunden aufgerufen.
2. Asynchrone Kommunikation: Über diese tauscht die PLC Daten mit anderen (nicht IO-) Geräten oder Rechnerumgebungen aus. Dabei kommen höherwertige Protokolle wie HTTP oder OPC-UA zum Einsatz. Diese Kommunikation hat kein definiertes Zeitverhalten.
3. Anschluss für dezentrale Peripherie: Diese auch als Feldbus bezeichnete Schnittstelle kommuniziert mit IO-Baugruppen. Typischerweise erfolgt der Datenaustausch auf Basis eines zyklischen Protokolls (z.B. Profinet, EtherCat). Die Kommunikation hat ein eindeutig definiertes Zeitverhalten.
4. Anschluss für zentrale Peripherie: Diese Schnittstelle hat meistens keinen allgemeinen Physik-Layer (ISO Layer 1-2, z.B. Ethernet), sondern einen herstellerspezifischen SteckVerbinder. Das Zeitverhalten ist eindeutig und der Datenaustausch zyklisch. Da die Verbindung zumindest teilweise an der Rückseite der PLC lokalisiert ist, wird diese Schnittstelle auch als Rückwandbus (RWB) bezeichnet.

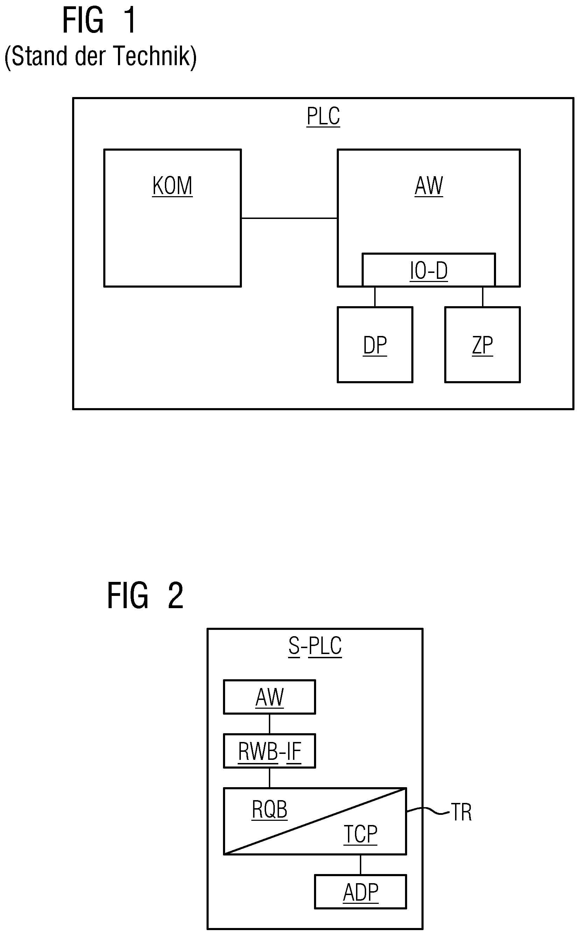

Die Figur 1 (Stand der Technik) zeigt dies. Dabei ist eine Steuerung PLC dargestellt, die zunächst Kommunikationsmittel KOM für nicht-deterministische Kommunikation umfasst, beispielsweise HTTP, OPC-UA, ... Eine Anwendung bzw. Anwenderprogramm AW stellt den Steuerungskern dar, der mit IO-Daten IO-D arbeitet. Die Steuerung PLC umfasst dabei sowohl Anschlüsse für dezentrale Peripherie DP, als auch für zentrale Peripherie ZP.

Sowohl in der simulierten als auch in der virtuellen PLC ist die Software-Komponente für die oben genannte 4. Einheit, also im Wesentlichen der Treiber für den Rückwandbus (RWB), der die Verbindung zu den zentralen Peripherie-Baugruppen herstellt, deaktiviert, weil zu deren Betrieb auch die entsprechende Hardware-Komponente vorhanden sein muss. Der Rückwandbus zeichnet sich wie bereits erwähnt vor allem dadurch aus, dass er deterministisch arbeitet und somit die Daten der Peripherie-Baugruppen in definierter Zeit transportiert.

Es ist also eine Aufgabe der vorliegenden Erfindung, eine Anordnung und ein Verfahren bereitzustellen, womit eine virtualisierte oder simulierte industrielle Anwendung ohne Änderungen mit einer zentralen Peripherie betrieben werden kann.

Eine Kernidee der erfindungsgemäßen Lösung dieser Aufgabe ist es, die untersten und somit hardwareabhängigen Schichten dieser RWB-Software, also des Treibers, durch eine Variante zu ersetzen, die zur weiteren Kommunikation auf Mittel setzt, die in der Umgebung der simulierten oder virtuellen PLC vorhanden sind. Diese Mittel kommen daher aus der IT- und nicht aus der OT-Welt.

Die Aufgabe wird insbesondere durch die Merkmale der unabhängigen Patentansprüche gelöst.

Dabei wird eine Anordnung zum Betrieb einer industriellen Anwendung mit einer virtuellen industriellen Baugruppe vorgeschlagen, wobei die industrielle Anwendung zum Ablauf auf einer Hardware-Einheit installiert ist, und wobei die industrielle Anwendung zum Zusammenwirken mit einem Anwendungsinterface eines Treibers für eine deterministische Hardwareschnittstelle, insbesondere mit einem echtzeitfähigen industriellen Rückwandbus und somit ein Rückwandbus-Interface, für den Zugriff auf eine industrielle Baugruppe, insbesondere einer Erweiterungsbaugruppe für den Rückwandbus, eingerichtet ist. Dabei ist für die Anwendung ein angepasster Treiber mit dem Anwendungsinterface auf der Hardware-Einheit eingerichtet, wobei der angepasste Treiber zum Umsetzen der Zugriffe der industriellen Anwendung auf die industrielle Baugruppe in ein echtzeitfähiges Kommunikationsverfahren eingerichtet ist, und umgekehrt. Dazu ist die virtuelle industrielle Baugruppe ebenfalls zum Zusammenwirken mit einem gleichartigen Anwendungsinterface des Treibers für die deterministische Hardwareschnittstelle ausgestaltet, wobei die virtuelle industrielle Baugruppe zum Ablauf auf der oder einer anderen Hardware-Einheit installiert ist, wobei auf dieser Hardware-Einheit zu der virtuellen industriellen Baugruppe der oder ein anderer angepasster Treiber mit dem Anwendungsinterface installiert ist, und wobei dieser angepasste Treiber zum Umsetzen der von Zugriffen der Anwendung über deren angepassten Treiber und das echtzeitfähige Kommunikationsverfahren auf die virtuelle industrielle Baugruppe eingerichtet ist, und umgekehrt. Dazu sind die angepassten Treiber über ein Kommunikationsmittel gemäß dem echtzeitfähigen Kommunikationsverfahren miteinander verbunden. Mit dieser Anordnung ist es möglich, die virtualisierte oder simulierte Anwendung ohne Änderungen gegenüber einem direkten Betrieb mit einer zentralen Peripherie zu betreiben, insbesondere zu Testzwecken oder in Fällen, in denen die zentrale Peripherie nicht oder noch nicht real verfügbar ist.

Die Aufgabe wird ebenso durch ein Verfahren zum Betrieb einer industriellen Anwendung mit einer virtuellen industriellen Baugruppe gelöst, wobei die industrielle Anwendung zum Ablauf auf einer Hardware-Einheit installiert wird, und wobei die industrielle Anwendung zum Zusammenwirken mit einem Anwendungsinterface eines Treibers für eine deterministische Hardwareschnittstelle, insbesondere mit einem echtzeitfähigen industriellen Rückwandbus, für den Zugriff auf eine industrielle Baugruppe, insbesondere einer Erweiterungsbaugruppe, eingerichtet ist. Dabei wird für die Anwendung ein angepasster Treiber mit dem Anwendungsinterface auf der Hardware-Einheit eingerichtet, wobei der angepasste Treiber zum Umsetzen der Zugriffe der industriellen Anwendung auf die industrielle Baugruppe in ein echtzeitfähiges Kommunikationsverfahren eingerichtet ist, und umgekehrt. Dazu ist ebenso die virtuelle industrielle Baugruppe ebenfalls zum Zusammenwirken mit dem Anwendungsinterface des Treibers für die deterministische Hardwareschnittstelle ausgestaltet ist, wobei die virtuelle industrielle Baugruppe zum Ablauf auf der oder einer anderen Hardware-Einheit installiert wird, wobei auf dieser Hardware-Einheit zu der virtuellen industriellen Baugruppe der oder ein anderer angepasster Treiber mit dem Anwendungsinterface installiert wird, und wobei dieser angepasste Treiber zum Umsetzen der von Zugriffen der Anwendung über deren angepassten Treiber und das echtzeitfähige Kommunikationsverfahren auf die virtuelle industrielle Baugruppe eingerichtet ist, und umgekehrt. Dazu kommunizieren die angepassten Treiber über ein Kommunikationsmittel gemäß dem echtzeitfähigen Kommunikationsverfahren miteinander. Mittels dieses Verfahrens können die bereits anhand der Anordnung diskutierten Vorteile erzielt werden.

Vorteilhafte Ausgestaltungen der erfindungsgemäßen Anordnung und des erfindungsgemäßen Verfahrens sind in den abhängigen Patentansprüchen angegeben. Die Ausgestaltungen des Verfahrens können sinngemäß auch auf die Anordnung angewendet werden, und umgekehrt. Die Merkmale der Ausgestaltungen können sowohl einzeln als auch in sinnfälliger Kombination miteinander realisiert werden.

Vorteilhaft sind die Anwendung und die virtuelle industrielle Baugruppe in jeweils einer virtuellen Maschine einer gemeinsamen Hardware-Einheit installiert, wobei als das Kommunikationsmittel ein Shared Memory der Hardware-Einheit eingerichtet ist. Dadurch ist eine sichere und deterministische Kommunikation gewährleistet. Außerdem können die virtuellen Maschinen eine reale Betriebsumgebung nachbilden, so dass sowohl die Anwendung als auch die virtualisierte Baugruppe unter realen Bedingungen getestet werden können. Die Virtualisierung kann dabei auch eine Container-Virtualisierung sein.

Weiter ist es vorteilhaft auch möglich, die Anwendung und die virtuelle industrielle Baugruppe auf unterschiedlichen Hardware-Einheiten zu installieren, wobei als das Kommunikationsmittel ein Datennetzwerk vorgesehen ist und wobei ein Kommunikationsverfahren mit Time-Sensitive Networking (TSN) Mechanismen vorgesehen ist. Dazu ist es vorteilhaft, auf dem lokalen Kommunikationsmedium, beispielsweise einem Shared Memory, jeweils ein virtuelles Ethernet zu definieren, womit alle Teilnehmer eineindeutig adressiert werden können. Das ermöglicht es auch, um für die "erweiterte Strecke" zu anderen Rechenknoten ein physikalisches Ethernet zu verwenden und dessen Determinismus mit TSN-Mechanismen abzusichern. Somit kann aus Performance-Gründen, aber auch zur organisatorischen Vereinfachung, die Rechenlast auf unterschiedliche Knoten und sogar Standorte verteilt werden.

Ein besonders realistischer Systemtest ist möglich, wenn die Anwendung in einer simulierten speicherprogrammierbaren Steuerung installiert ist und dass die virtuelle industrielle Baugruppe zur Simulation einer realen Baugruppe ausgestaltet ist.

Eine virtuelle Inbetriebnahme kann umfassend getestet und durchgeführt werden, indem an die virtuelle industrielle Baugruppe eine Anordnung, insbesondere ein Computer mit einem Simulationsprogramm, zur Simulation einer industriellen Produktionseinrichtung oder eines industriellen Prozesses angeschlossen ist, wobei die virtuelle industrielle Baugruppe zur Bereitstellung simulierter Ein- und Ausgabeports ("IOs") eingerichtet ist und das Simulationsprogramm zur Bereitstellung bzw. zum Empfang simulierter Ein- und Ausgabesignale eingerichtet ist.

Ausführungsbeispiele der erfindungsgemäßen Anordnung werden nachfolgend anhand der Zeichnungen erläutert. Es dient gleichzeitig zur Erläuterung des erfindungsgemäßen Verfahrens. Es wird insbesondere darauf hingewiesen, dass auch Mischformen der Ausführungsbeispiele realisiert werden können und insbesondere auch die in den Ausführungsbeispiel unterschiedlichen Ausgestaltungen miteinander kombiniert und somit zusammenwirken können.

Dabei zeigen:
- Figur 1: die bereits diskutierten Beziehungen zwischen den Einheiten einer klassischen industriellen Steuerung (Stand der Technik),
- Figur 2: die erfindungsgemäße Auftrennung des Rückwandbus-Stacks,
- Figur 3: ein (virtuelles) Netzwerk in einem Rechner mit einer simulierten Steuerung und einer simulierten Peripherie,
- Figur 4: die Kopplung einer virtuellen Steuerung mit einer virtuellen Peripherie,
- Figur 5: die Zugriffskontrolle bei mehreren virtuellen Peripherie-Baugruppen mittels eines Arbiters, und
- Figur 6: die Erweiterung auf einen durchgängigen Determinismus in einem Rechen-Cluster.

Im Folgenden wird von einer Architektur gemäß dem Stand der Technik ausgegangen, die in der Figur 1 dargestellt und bereits schon zuvor erläutert wurde.

Die Figur 2 stellt die erfindungsgemäße Auftrennung des Rückwandbus-Stacks dar. Im Folgenden wird das vereinfacht auch "Auftrennung des Treibers" genannt, weil erfindungsgemäß ein Treiber bzw. eine Treibersoftware bereitgestellt wird, die sich seitens einer (simulierten oder virtualisierten) Anwendung oder Baugruppe am "Applikations-API" wie ein realer Rückwandbus bzw. eine reale deterministische Hardwareschnittstelle verhält und auch wie eine solche kommuniziert, an ihrer "Transport-API" jedoch nicht mit einer realen (Hardware)Baugruppe desselben Rückwandbusses bzw. derselben realen deterministischen Hardwareschnittstelle (allgemein: des Transport-Layer 2 im ISO/OSI-Schichtenmodell) kommuniziert, sondern die entsprechenden Daten IO-D (oft Ein- und Ausgabesignale industrieller Komponenten, auch I/O-Daten genannt) in eine andere deterministische Kommunikation (Shared-Memory-basierte Kommunikation, TSN-basierte Kommunikation, Echtzeit-Datenströme oder dgl.) umsetzt, und umgekehrt. Vorzugsweise ist an diesem "Backend" wiederum ein gleichartiger aufgetrennter Rückwandbus-Stack mit einer realen oder simulierten oder virtualisierten Baugruppe, Steuerung oder Technologie-Modul angeschlossen. Alternativ kann das "Backend" aber auch direkt mit einem Kommunikationspartner zusammenwirken und die Daten austauschen, der nicht auf die Verwendung einer Rückwandbus-Architektur hin ausgestaltet ist, was insbesondere virtualisierte oder simulierte Komponenten betreffen kann.

Die Figur 2 veranschaulicht das Verfahren für den Fall der simulierten Steuerung S-PLC. Als Beispiel wird hier der Rückwandbus (RWB) der Siemens Simatic S7-1500 genommen, aber das Prinzip hier und in allen weiteren Darstellungen gilt analog für jede PLC eines beliebigen Herstellers. Auf dem Rückwandbus-Interface RWB-IF setzt eine industrielle Anwendung AW auf. Der Architektur-Stack (hier als Treiber TR gezeichnet) der RWB-Software wird auf der Ebene des Übergangs zum OSI-Layer-2 (bei dem RWB der S-1500 "MASP-IF" genannt) aufgetrennt und die Telegramme in einen Konverter überführt, der das Paradigma des "Request-Block" RQB in eine stream-orientierte Kommunikation überführt, die vorteilhaft mittels einer TCP-Verbindung TCP realisiert wird - natürlich gibt es auch eine Konvertierung in umgekehrter Flussrichtung. Für die simulierte PLC ist die TCP-Kommunikation, die nichtdeterministisch ist, vollkommen ausreichend, da die simulierte PLC ebenfalls nicht deterministisch arbeitet.

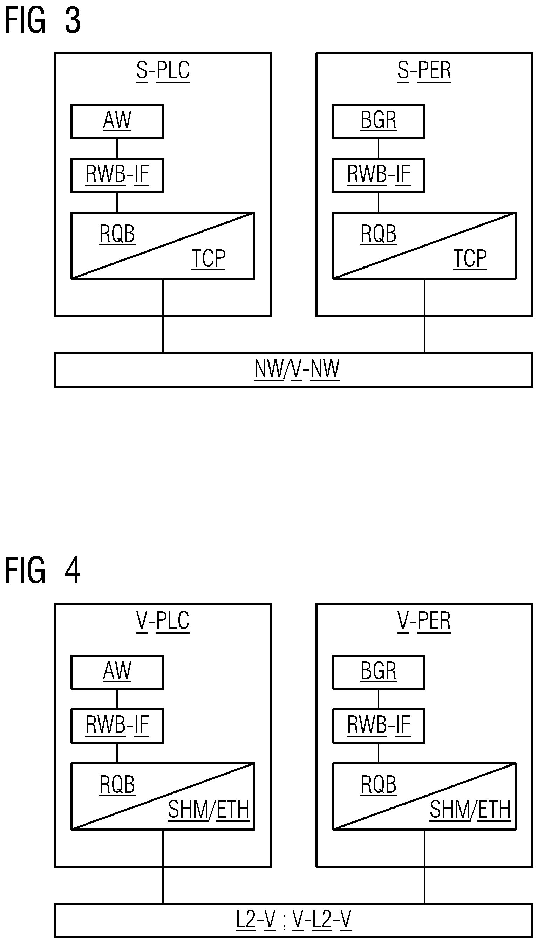

Die (in Figur 2 nicht dargestellte) Peripherie-Baugruppe als entsprechendes Gegenstück (z.B. Kommunikations-Prozessor) enthält ebenso eine modifizierte RWB-Software. Dieser Fall ist in der Figur 3 gezeigt. Dieses Gegenstück kann im Falle der simulierten Peripherie S-PER (simulierte Peripherie) als weiterer (Windows-)Prozess auf dem gleichen Rechner laufen, wobei aufgrund der TCP-Verbindung - hier als Netzwerk NW oder virtuelles Netzwerk V-NW gezeigt - sogar eine Auslagerung an eine virtuelle Maschine VM oder einen anderen Rechner möglich ist.

Diese Möglichkeit ist vorteilhaft, wenn die neben der Steuerung PLC zu simulierende Baugruppe BGR mehr Rechenleistung benötigt, um beispielsweise ein neuronales Netz zu berechnen.

Die Figur 3 zeigt dabei die Gesamtkonfiguration, bei der eine simulierte Steuerung S-PLC mit einer oder auch mehreren Peripherie-Baugruppen BGR über die für diesen Zweck vorgesehene Methode, nämlich den Rückwandbus, der die virtualisierte Netzwerkverbindung NW / V-NW unterstützt, kommuniziert. Die Projektierung der Steuerung bzw. der Anwendung AW muss somit nicht mehr verändert werden, da diese nun vollständig im virtualisierten bzw. simulierten Umfeld betrieben werden kann. Des Weiteren kann die Steuerung S-PLC bei der Inbetriebnahme die jeweiligen Teilprojektierungen wie üblich per Rückwandbus-Kommunikation in die Peripherie-Baugruppen laden.

Ist die Software der Peripherie auch unter einem General-Purpose-Betriebssystem (z.B. Windows) lauffähig, kann diese wie auch die Steuerung S-PLC als ein Prozess unter diesem Betriebssystem (z.B. Windows-Prozess) laufen. Ist sie dies nicht, bietet sich eine virtuelle Maschine an, in der die Software der Peripherie inklusive ihres eigenen Betriebssystems (z.B. Linux) praktisch unverändert läuft.

In dem besagten Kundenprojekt als Beispiel könnte somit neben der simulierten Steuerung S-PLC auch die Kommunikation über ein oder mehrere Kommunikations-Prozessoren als zentrale Peripherie unverändert bei der virtuellen Inbetriebnahme getestet werden.

Die Figur 4 zeigt den Anwendungsfall einer virtuellen oder virtualisierten Steuerung V-PLC. Bei der virtuellen Steuerung V-PLC kann die Rückwandbus-Kommunikation nur bedingt über eine TCP-Strecke realisiert werden, da hier der Determinismus erhalten bleiben muss. Das Grundprinzip des Auftrennens der RWB-Software hingegen kann unverändert übernommen werden.

Die virtuelle Steuerung V-PLC selbst läuft auch nicht als Windows-Prozess, sondern als virtuelle Maschine (VM) oder als (Docker-)Container in einem größeren Rechensystem, das im Folgenden als Host bezeichnet wird. Dieser Host, meist ein entsprechend großer Server oder gar ein Cluster mehrerer Server, bietet dementsprechend auch mehr Optionen als ein Windows-Rechner.

Als Basis für eine deterministische Kommunikation bietet sich sogenanntes "Shared-Memory" SHM an, also ein Stück Hauptspeicher, auf den mehrere Instanzen (Prozess, Virtuelle Maschine, Container) zugreifen können. Der Datentransfer erfolgt somit aber unmittelbar, da diese Art der Verbindung dem Layer-2 im OSI-Schichtenmodell der allgemeinen Kommunikation entspricht. Damit ersetzt ein Shared-Memory SHM auch direkt den Teil der Rückwandbus-Software, der modifiziert wurde, da die Hardwareabhängigkeit im Layer-2 besteht.

Zur Vereinfachung der Handhabung des SHM ist es vorteilhaft, den Mechanismus einer virtuellen Ethernet-Schnittstelle ETH (ebenfalls Layer-2) zu verwenden. Jeder Teilnehmer der Kommunikation erhält darüber automatisch eine eindeutige Adresse (MAC-Adresse), so dass die Zustellung der Daten in Form eines Request-Blocks RQB erfolgen kann. Dies wird im nachfolgenden Abschnitt näher erläutert, speziell unter dem Aspekt, den Determinismus der Kommunikation zu erhalten.

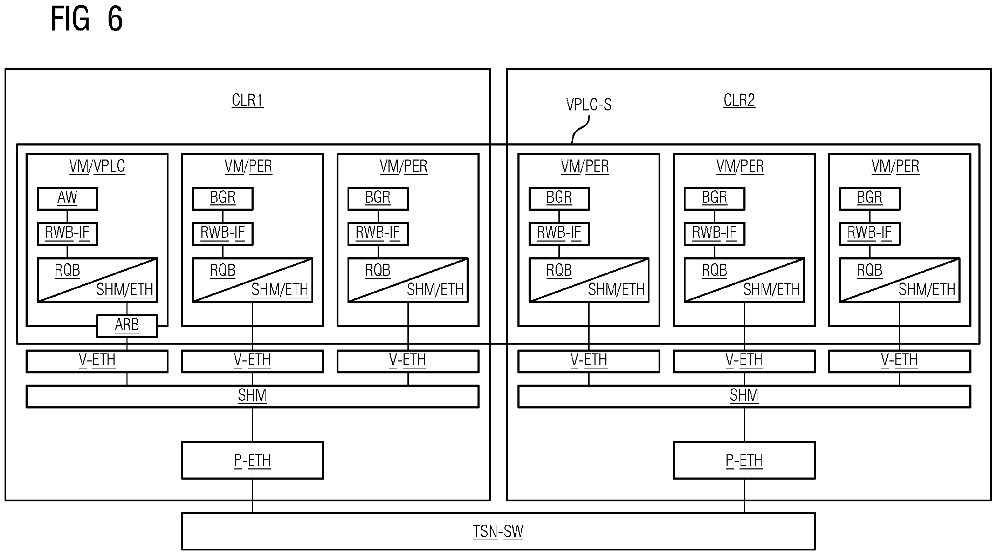

Die Figur 4 zeigt die Kommunikation in einem Host-Rechner / Server basierend auf Shared-Memory SHM bzw. darauf aufbauendem virtuellem Ethernet ETH. Letzteres erhöht zudem die Flexibilität des "Deployments", da die einzelnen Instanzen wie auch die virtuelle Steuerung V-PLC sowohl als virtuelle Maschine als auch als Container laufen können. Beide Konstrukte nutzen generell virtuelles Ethernet V-ETH (siehe Figur 6) zur Kommunikation, so dass keine additiven Maßnahmen auf Host-Seite notwendig sind, um den alternativen Layer-2 L2-V, V-L2-V (Layer-2-Verbindung oder virtuelle Layer-2-Verbindung in dem Server) zur Verfügung zu stellen.

Prinzipiell kann auch auf dem Host die Lösung mittels TCP-Verbindung statt Shared Memory / Ethernet SHM/ETH verwendet werden. Damit ist zwar der Determinismus nicht mehr zwingend gegeben, aber dies erlaubt die Auslagerung der virtuellen Baugruppen auf andere Host-Rechner im gleichen HCl-Cluster (HCl - Hyperconverged Infrastructure).

Umgekehrt kann auch im Falle der simulierten Steuerung S-PLC statt einer TCP-Verbindung eine reine Layer-2 Kommunikation auf dem vorhandenen virtuellen Ethernet etabliert werden. Damit kann der Adapter identisch gehalten werden für beide beschriebenen Anwendungsfälle. Bei der simulierten Steuerung S-PLC kann dennoch kein vollständig deterministisches Verhalten erreicht werden, da die beteiligten Systeme selbst nicht deterministisch arbeiten.

Neben Peripherie-Baugruppen BGR mit fester Funktion und damit bekannter Firmware wie beispielsweise Kommunikations-Prozessoren oder Technologie-Modulen kann mit dieser Methode auch eine frei programmierbare Baugruppe erstellt werden, in der sowohl firmeninterne Entwickler als auch Kunden eigene Software mit enger Kopplung an die Steuerung S-PLC laufen lassen können.

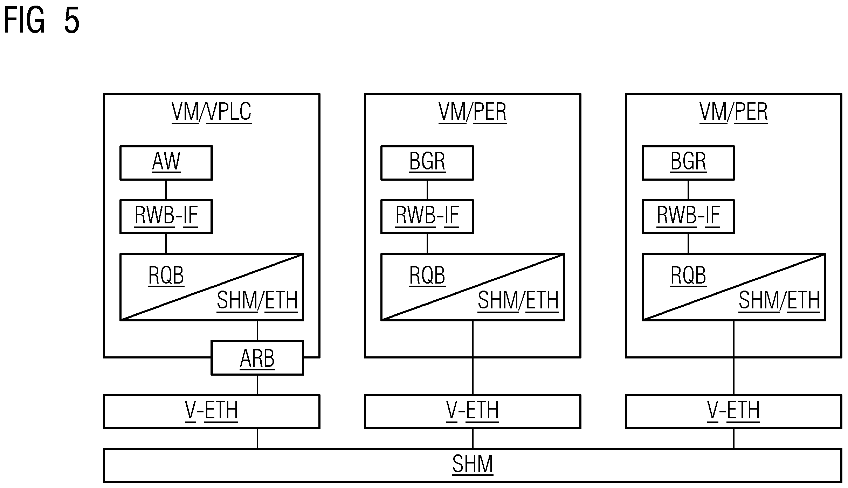

Der Determinismus des Rückwandbusses setzt auf zwei wesentlichen Mechanismen auf, die der erfindungsgemäße Adapter bzw. Treiber TR ebenfalls realisieren muss:
1. Request-Block-Mechanismus (RQB):
   Diese Methode sorgt für eine Fluss-Steuerung der auf dem Bus aufsetzenden Applikationen. Dabei müssen die Applikationen der Software des Busses dedizierte Datenbereiche (Request-Block) zur Verfügung stellen, in die die ankommenden Telegramme umkopiert werden. Ist kein Block verfügbar, wird das Telegramm verworfen und gelangt nicht zur Applikation bzw. Anwendung AW. Damit kann auch eine Überlastung der Applikation und somit des Systems vermieden werden, da nicht die Bus-Software den Speicher allokiert, der bei zu viel Last an seine Grenzen kommt.
   Eine in der IT-Welt übliche TCP-Verbindung hat diesen Mechanismus nicht, so dass hier mit einer DoS (Denial-of-Service) Attacke ein System an seine (Speicher-)Grenze gebracht werden könnte.
2. Access-Control:
   Da der Rückwandbus klassischerweise ein Shared Media darstellt, auf das alle angebundenen Teilnehmer gleichermaßen zugreifen können, muss sichergestellt werden, dass Konflikte entweder erkannt und behoben oder von vorneherein vermieden werden.
   Im Falle des Rückwandbusses sorgt ein sogenannter Arbiter ARB - siehe Figuren 5 und 6 - für die Zuteilung der Zugriffsrechte. Will eine Baugruppe ein Telegramm an eine andere senden, fragt sie beim Arbiter an (Request) und erhält je nach dessen Strategie sofort oder verzögert den Zugriff (Grant). Gleichzeitig wird damit der angesprochenen Baugruppe erlaubt, ein (einziges) Antwort-Telegramm zu schicken.

Da sowohl die maximale Länge der Telegramme als auch die Übertragungsgeschwindigkeit bekannt ist, kann die Zeit für eine einzelne Datenkommunikation exakt bestimmt werden. Nimmt man zusätzlich die Zahl der vorhandenen Initiatoren einer Kommunikation dazu, lässt sich die maximale Wartezeit berechnen, bis ein bestimmter Initiator den Bus-Zugriff bekommt. Daraus ergibt sich der Determinismus.

Das Shared-Memory (SHM) stellt ebenso ein Shared Medium dar, so dass mittels einer Zugriffs-Steuerung die Konflikte minimiert oder gar eliminiert werden müssen. Dabei hilft vorteilhaft die Nutzung des Mechanismus eines virtuellen Ethernets auf Basis des SHM. Dieser Mechanismus teilt das SHM in definierte Bereiche ein und vergibt an alle Teilnehmer eine eindeutige Adresse (MAC-Adresse, Media-Access-Control-Adresse), mittels der jeder Teilnehmer gezielt angesprochen werden kann.

Dies ist ebenfalls beim Rückwandbus der Fall, nur mit dem Unterschied, dass dieser die Adressen dynamisch beim Einschalten entsprechend der Reihenfolge am Bus vergibt. Der Adapter muss somit die Möglichkeit einer vom Anwender einstellbaren Adresse bieten, da nur dieser die Reihenfolge kennt bzw. aus der PLC-Projektierung entnehmen kann.

Vorteilhaft ist dabei die Umsetzung mit virtuellem Ethernet dahingehend, dass die dortige MAC-Adresse per Software vergeben wird und nicht wie bei Hardware-Ethernet in der Netzwerkkarte fest eingestellt ist. Um die spätere Diagnose zu erleichtern, vergibt man die MAC-Adressen derart, dass die ersten fünf Stellen fest sind, während die letzte Stelle wie beim Rückwandbus praktisch dem Steckplatz entspricht, so dass die RWB-Software mit dieser letzten Stelle exakt genauso verfahren kann, wie mit den dynamisch vergebenen.

Des Weiteren bildet der Adapter auch das Verhalten des Arbiters nach, um einen kontrollierten Zugriffsmechanismus zu realisieren. Da somit Konflikte auf dem Shared Media des virtuellen Ethernets ausgeschlossen sind, bleibt die obige Aussage zum Determinismus vollständig gültig. Wie auch bei dem Hardware-Arbiter des Rückwandbusses sind dabei in der erfindungsgemäßen Umsetzung verschiedene Strategien umsetzbar, also beispielsweise alle Teilnehmer gleichberechtigt oder die PLC erhält immer Vorrang.

Die Figur 5 zeigt die Zugriffskontrolle bei mehreren virtuellen Peripherie-Baugruppen. Das Request-Block-Interface RQB des Adapters zu den Applikationen bzw. Anwendung AW hin sorgt zum einen dafür, dass der Speicherverbrauch nicht exorbitant ansteigen kann. Zum anderen kann der gesamte Speicher im Voraus allokiert werden, so dass ungeplante Latenzen durch dynamische Speicheranforderung vermieden werden.

Um den Determinismus der virtuellen Rückwandbus-Kopplung zu erreichen, kann das Deployment der einzelnen virtuellen Baugruppen (PLC, Peripherie, ...) insofern eingeschränkt werden, als alle zu einem System gehörenden Teilnehmer auf ein und demselben Host-System (im weiteren auch Hardware-Einheit genannt) installiert sein und ablaufen müssen.

Durch Nutzung weiterer Technologien kann dies allerdings auch in einem Rechner-Cluster (HCl - Hyper Converged Infrastructure) erreicht werden. Dies ist in der Figur 6 gezeigt. Zwischen den einzelnen Hosts CLR1, CLR2 (Cluster-Rechner 1, Cluster-Rechner 2) in einem Cluster existieren in der Regel physikalische Ethernet-Verbindungen P-ETH mit hoher Bandbreite. Dies alleine reicht aber nicht aus, da in dem beschriebenen Anwendungsfall die Latenz der Verbindung die wesentliche relevantere Randbedingung darstellt.

Wird die Verbindung zwischen den Rechnern eines Clusters hingegen mit TSN (Time Sensitive Network) auf Layer-2 realisiert inklusiver aller Netzwerkkomponenten (Switche) TSN-SW ("TSN-Switch"), können auch die Latenzen der Kommunikation zweier virtueller Maschinen auf verschiedenen Host-Rechnern sowohl definiert als auch garantiert werden.

Damit ist der Determinismus erneut hergestellt und erlaubt ähnlich wie bei den simulierten Baugruppen die Verteilung auf mehrere Rechenknoten, um die Leistung des virtuellen PLC-Systems inklusive virtueller Peripherie (vPLC-System) zu steigern. Die Figur 6 verdeutlicht das Konzept. Dabei läuft auf dem linken Cluster-Rechner CLR1 sowohl die virtuelle Steuerung v-PLC als auch einige Peripherien, während auf dem zweiten Cluster-Rechner CLR2 nur virtuelle Peripherien VM/PER (virtuelle Maschine - virtuelle Peripherie) laufen. Wichtig ist dabei, dass in dem virtuellen Verbund vPLC-S (virtuelle Steuerungs-System) dieser virtuellen Instanzen nur ein Arbiter (an der virtuellen Steuerung vPLC) läuft, um den Determinismus zu gewährleisten.

Dieses Konzept kann auch mehr als zwei Cluster-Rechner pro virtuellem Steuerungs-System VPLC-S umfassen, da über den TSN-Switch TSN-SW die Latenz zwischen allen Knoten garantiert ist.

Des Weiteren können in einem Cluster durch Definition mehrerer individueller TSN-Kanäle (Streams) auch mehrere vPLC-Systeme (virtuelle PLC und über die Rechenknoten verteilten virtuellen Peripherien) parallel laufen. Somit lässt sich eine beliebige Skalierung in einem HCl-Cluster erreichen.

Die beiden Ausprägungen der Erfindung für die simulierte und virtuelle PLC bieten einige Vorteile:
- Der virtuelle Rückwandbus bildet sowohl die bekannte Funktionalität als auch die geforderte und notwendige Deterministik des realen Rückwandbusses ab.
- Es ist keine Änderung der PLC-Projektierung und des PLC-Programm notwendig, um eine virtuelle Inbetriebnahme der erstellten Automatisierungslösung inklusive aller zentralen Baugruppen vorzunehmen.
- Die Abdeckung der getesteten Lösung erhöht sich somit auf 100% und spiegelt das Verhalten der realen Lösung entsprechend wider.
- Ein Hersteller von industriellen Steuerungen kann neben der simulierten PLC weitere Baugruppen für die Simulation bereitstellen (z.B. virtuelle Kommunikations-Prozessoren oder Neuronale-Netze-Module), damit die Kunden eine vollumfängliche virtuelle Inbetriebnahme vornehmen können.
- Ein Hersteller von industriellen Steuerungen kann neben der virtuellen PLC weitere Baugruppen für den virtuellen Betrieb als kaufbare Produkte anbieten, damit Kunden ihre Automatisierungsprojekte wie gewohnt in allen Facetten umsetzen können. Dabei können die virtuellen Pendants der realen Baugruppen sogar leistungsfähiger sein als diese, da das virtuelle Abbild auf schnellerer Hardware läuft.
- Neue Baugruppen können incl. ihrer Firmware entwickelt und getestet werden, bevor die dazugehörige Hardware verfügbar ist. Dies kann zunächst rein funktionell mit der simulierten PLC erfolgen und später sogar inklusive des korrekten zeitlichen Verhaltens mit der virtuellen PLC.
- Dazu wird eine virtuelle Baugruppe (virtuelle Maschine oder Container) ähnlich der heute als Hardware verfügbaren Technologiemodule (z.B. neuronale Prozessoren) verwendet. Diese enthält ein frei programmierbares Linux und stellt ebenfalls eine Verbindung zu dem realen Rückwandbus her.
- Das System aus virtueller PLC und dazugehörigen virtuellen Peripherien lässt sich unter Nutzung eines deterministischen Ethernets (vorteilhaft TSN) auch über mehrere Rechner verteilen, um so die Leistung weiter zu steigern.
- Der Gedanke eines offenen Ecosystems wird erweitert, indem verschiedene Anbieter eigene virtuelle Baugruppen für verschiedene Aufgaben als zentrale Peripherie der virtuellen Steuerung entwickeln und anbieten können.

Das als Beispiel angeführte Kundenproblem lässt sich mit dieser Erfindung nicht nur für den Fall der simulierten PLC lösen, sondern kann auch mit der virtuellen PLC und entsprechenden virtuellen Kommunikations-Prozessoren für den anschließenden Betrieb umgesetzt werden.

Auf dem Markt sind bereits sowohl simulierte als auch virtuelle Steuerungen verfügbar, aber keine davon unterstützt zentrale Erweiterungsbaugruppen. Die Erfindung deckt dabei sowohl den lose gekoppelten Ansatz im Falle der simulierten PLC, als auch den streng deterministischen Ansatz der virtuellen PLC ab.

## Patentansprüche

1. Anordnung zum Betrieb einer industriellen Anwendung (AW) mit einer virtuellen industriellen Baugruppe (BGR),
wobei die industrielle Anwendung (AW) zum Ablauf auf einer Hardware-Einheit (PLC) installiert ist, und
wobei die industrielle Anwendung (AW) zum Zusammenwirken mit einem Anwendungsinterface (RWB-IF) eines Treibers für eine deterministische Hardwareschnittstelle, insbesondere mit einem echtzeitfähigen industriellen Rückwandbus, für den Zugriff auf eine industrielle Baugruppe (BGR), insbesondere einer Erweiterungsbaugruppe, eingerichtet ist,
**dadurch gekennzeichnet,**
**dass** für die Anwendung (AW) ein angepasster Treiber (RQB/TCP; RQB/SHM/ETH) mit dem Anwendungsinterface (RWB-IF) auf der Hardware-Einheit (S-PLC; V-PLC) eingerichtet ist,
wobei der angepasste Treiber (RQB/TCP; RQB/SHM/ETH) zum Umsetzen der Zugriffe der industriellen Anwendung (AW) auf die industrielle Baugruppe (BGR) in ein echtzeitfähiges Kommunikationsverfahren eingerichtet ist, und umgekehrt,
**dass** die virtuelle industrielle Baugruppe (BGR) ebenfalls zum Zusammenwirken mit dem Anwendungsinterface (RWB-IF) des Treibers für die deterministische Hardwareschnittstelle ausgestaltet ist,
**dass** die virtuelle industrielle Baugruppe (BGR) zum Ablauf auf der oder einer anderen Hardware-Einheit (S-PER; VM/PER; V-PER) installiert ist,
wobei auf dieser Hardware-Einheit (S-PER; VM/PER; V-PER) zu der virtuellen industriellen Baugruppe (BGR) der oder ein anderer angepasster Treiber mit dem Anwendungsinterface (RWB-IF) installiert ist,
wobei dieser angepasste Treiber (RQB/TCP; RQB/SHM/ETH) zum Umsetzen der von Zugriffen der Anwendung (AW) über deren angepassten Treiber (RQB/TCP; RQB/SHM/ETH) und das echtzeitfähige Kommunikationsverfahren auf die virtuelle industrielle Baugruppe (BGR) eingerichtet ist, und umgekehrt,
wobei die angepassten Treiber (RQB/TCP; RQB/SHM/ETH) über ein Kommunikationsmittel gemäß dem echtzeitfähigen Kommunikationsverfahren miteinander verbunden sind.

2. Anordnung nach Patentanspruch 1,
**dadurch gekennzeichnet,**
**dass** die Anwendung (AW) und die virtuelle industrielle Baugruppe (BGR) in jeweils einer virtuellen Maschine (VM) einer gemeinsamen Hardware-Einheit installiert sind, wobei als das Kommunikationsmittel ein Shared Memory (SHM) der Hardware-Einheit eingerichtet ist.

3. Anordnung nach Patentanspruch 1,
**dadurch gekennzeichnet,**
**dass** die Anwendung (AW) und die virtuelle industrielle Baugruppe (BGR) auf unterschiedlichen Hardware-Einheiten installiert sind, wobei als das Kommunikationsmittel ein Datennetzwerk (NW; V-NW; TSN-SW) vorgesehen ist und wobei ein Kommunikationsverfahren mit Time-Sensitive Networking (TSN) Mechanismen vorgesehen ist.

4. Anordnung nach einem der vorgehenden Patentansprüche,
**dadurch gekennzeichnet,**
**dass** die Anwendung (AW) in einer simulierten speicherprogrammierbaren Steuerung (S-PLC) als die Hardware-Einheit installiert ist und dass die virtuelle industrielle Baugruppe (BGR) zur Simulation einer realen Baugruppe (BGR) ausgestaltet ist.

5. Anordnung nach Patentanspruch 4,
**dadurch gekennzeichnet,**
**dass** an die virtuelle industrielle Baugruppe (BGR) eine Anordnung, insbesondere ein Computer mit einem Simulationsprogramm, zur Simulation einer industriellen Produktionseinrichtung oder eines industriellen Prozesses angeschlossen ist,
wobei die virtuelle industrielle Baugruppe (BGR) zur Bereitstellung simulierter Ein- und Ausgabeports eingerichtet ist und das Simulationsprogramm zur Bereitstellung bzw. zum Empfang simulierter Ein- und Ausgabesignale eingerichtet ist.

6. Verfahren zum Betrieb einer industriellen Anwendung (AW) mit einer virtuellen industriellen Baugruppe,
wobei die industrielle Anwendung (AW) zum Ablauf auf einer Hardware-Einheit installiert wird, und
wobei die industrielle Anwendung (AW) zum Zusammenwirken mit einem Anwendungsinterface (RWB-IF) eines Treibers für eine deterministische Hardwareschnittstelle, insbesondere mit einem echtzeitfähigen industriellen Rückwandbus, für den Zugriff auf eine industrielle Baugruppe, insbesondere einer Erweiterungsbaugruppe, eingerichtet ist,
**dadurch gekennzeichnet,**
**dass** für die Anwendung (AW) ein angepasster Treiber (RQB/TCP; RQB/SHM/ETH) mit dem Anwendungsinterface (RWB-IF) auf der Hardware-Einheit eingerichtet wird, wobei der angepasste Treiber (RQB/TCP; RQB/SHM/ETH) zum Umsetzen der Zugriffe der industriellen Anwendung (AW) auf die industrielle Baugruppe in ein echtzeitfähiges Kommunikationsverfahren eingerichtet ist, und umgekehrt,
**dass** die virtuelle industrielle Baugruppe ebenfalls zum Zusammenwirken mit dem Anwendungsinterface (RWB-IF) des Treibers für die deterministische Hardwareschnittstelle ausgestaltet ist,
**dass** die virtuelle industrielle Baugruppe zum Ablauf auf der oder einer anderen Hardware-Einheit installiert wird,
wobei auf dieser Hardware-Einheit zu der virtuellen industriellen Baugruppe der oder ein anderer angepasster Treiber (RQB/TCP; RQB/SHM/ETH) mit dem Anwendungsinterface (RWB-IF) installiert wird,
wobei dieser angepasste Treiber (RQB/TCP; RQB/SHM/ETH) zum Umsetzen der von Zugriffen der Anwendung (AW) über deren angepassten Treiber (RQB/TCP; RQB/SHM/ETH) und das echtzeitfähige Kommunikationsverfahren auf die virtuelle industrielle Baugruppe eingerichtet ist, und umgekehrt,
wobei die angepassten Treiber (RQB/TCP; RQB/SHM/ETH) über ein Kommunikationsmittel gemäß dem echtzeitfähigen Kommunikationsverfahren miteinander kommunizieren.

7. Verfahren nach Patentanspruch 6,
**dadurch gekennzeichnet,**
**dass** die Anwendung (AW) und die virtuelle industrielle Baugruppe (BGR) in jeweils einer virtuellen Maschine (VM/VPLC; VM/PER) einer gemeinsamen Hardware-Einheit (CLR1; CLR2) installiert werden, wobei als das Kommunikationsmittel ein Shared Memory (SHM) der Hardware-Einheit (CLR1; CLR2) eingerichtet wird.

8. Verfahren nach Patentanspruch 6,
**dadurch gekennzeichnet,**
**dass** die Anwendung (AW) und die virtuelle industrielle Baugruppe (BGR) auf unterschiedlichen Hardware-Einheiten (PLC; S-PLC; V-PLC; CLR1; CLR2) installiert werden, wobei als das Kommunikationsmittel ein Datennetzwerk (NW; V-NW; TSN-SW) vorgesehen wird und wobei ein Kommunikationsverfahren mit Time-Sensitive Networking (TSN) Mechanismen verwendet wird.

9. Verfahren nach einem der Patentansprüche 6 - 8,
**dadurch gekennzeichnet,**
**dass** die Anwendung (AW) in einer simulierten speicherprogrammierbaren Steuerung installiert wird und dass die virtuelle industrielle Baugruppe zur Simulation einer realen Baugruppe betrieben wird.

10. Verfahren nach Patentanspruch 9,
**dadurch gekennzeichnet,**
**dass** an die virtuelle industrielle Baugruppe (BGR) eine Anordnung, insbesondere ein Computer mit einem Simulationsprogramm, zur Simulation einer industriellen Produktionseinrichtung oder eines industriellen Prozesses angebunden wird,
wobei die virtuelle industrielle Baugruppe zur Bereitstellung simulierter Ein- und Ausgabeports eingerichtet ist und das Simulationsprogramm zur Bereitstellung bzw. zum Empfang simulierter Ein- und Ausgabesignale (IOD) eingesetzt wird.

11. Treibersoftware für die Kommunikation einer industriellen Anwendung (AW) oder einer virtuellen industriellen Baugruppe mit einem anwendungsseitigen bzw. baugruppenseitigen Anwendungsinterface (RWB-IF) zur Emulation einer lokalen deterministischen Businfrastruktur, insbesondere einem industriellen Rückwandbus, wobei die Treibersoftware zur Umsetzung einer Buskommunikation der industriellen Anwendung (AW) bzw. der virtuellen industriellen Baugruppe in ein echtzeitfähiges Kommunikationsprotokoll, insbesondere ein Shared-Memory-basiertes Kommunikationsverfahren oder ein TSN-Kommunikationsverfahren, in einer Anordnung gemäß Patentanspruch 1 oder in einem Verfahren gemäß Patentanspruch 6 eingerichtet ist.
